# EUROPEAN PATENT APPLICATION

(11) **EP 4 503 590 A1**
(43) Date of publication of application: **05.02.2025**
(21) Application number: 24155759.4
(22) Date of filing: 05.02.2024
(51) Int. Cl.: H04N 5/262, H04N 5/272, H04N 23/61, H04N 23/63, H04N 23/67

(54) **SHOOTING METHOD, APPARATUS, ELECTRONIC DEVICE AND MEDIUM**

(30) Priority: 31.07.2023 CN 202310955316
(71) Applicant: Beijing Xiaomi Mobile Software Co., Ltd., Beijing 100085 (CN)
(72) Inventor: CAO, Zhiri, Beijing, 100085 (CN); LI, Haohan, Beijing, 100085 (CN)
(74) Representative: dompatent von Kreisler Selting Werner - Partnerschaft von Patent- und Rechtsanwälten mbB

(57) **Abstract**

The disclosure relates to a shooting method and apparatus, an electronic device, and a medium. The shooting method includes: during shooting, acquiring (S101) a plurality of first image frames in response to a first operation; displaying (S102) the plurality of first image frames and a first marker, showing a video capture region in the plurality of first image frames with the first marker; taking the images of the video capture region in the plurality of first image frames as the images to be recorded in the shooting process, and automatically adjusting a proportion of a shooting picture to make the recorded images more clear, thus helping the user to shoot a more professional and natural high-quality video, and satisfying the user's demand for video shooting.

## Description

### TECHNICAL FIELD

The disclosure relates to the technical field of an electronic device, and in particular, to a shooting method and apparatus, an electronic device, and a medium.

### BACKGROUND

In the digital era, cameras have become an integral part of the lives of many people. The camera function in the electronic device is not limited to shooting still photos with the camera, but also can be used to shoot videos and real-time streaming media.

### SUMMARY

To overcome the problems existing in the related art, the disclosure provides a shooting method and apparatus (also referred to as a recording method and a recording apparatus), an electronic device and a medium.

According to a first aspect of examples of the disclosure, there is provided a shooting method, the shooting method including:
acquiring a plurality of first image frames in response to a first operation, the plurality of first image frames including a first object;
displaying the plurality of first image frames and a first marker, where the first marker is located in a region where the first object is located, and the first marker indicates that the region where the first marker is located in the plurality of first image frames is being used as a video capture region to generate a video; and
generating a video from images of the video capture region in the plurality of first image frames.

In some examples of the disclosure, the shooting method further includes:
in response to a second operation, gradually moving the first marker from the region where the first object is located to a region where a second object is located in the plurality of first image frames.

In some examples of the disclosure, the shooting method further includes:
displaying a plurality of second image frames, the plurality of second image frames showing images of the region where the first marker is located in the plurality of first image frames.

In some examples of the disclosure, the shooting method further includes:
in the process of gradually moving the first marker from the region where the first object is located to the region where the second object is located in the plurality of first image frames, changing the images shown in the plurality of second image frames as the region where the first marker is located changes.

In some examples of the disclosure, the shooting method further includes:
in response to a third operation, adjusting a size of the first marker.

In some examples of the disclosure, the shooting method further includes:
blurring other regions in the plurality of first image frames except the region where the first marker is located.

In some examples of the disclosure, before displaying the plurality of first image frames and the first marker, the method further includes:
displaying the plurality of first image frames and recognizing a preset object in the first image frames; and
displaying a second marker, the second marker indicating a region where the preset object is located in the plurality of first image frames.

In some examples of the disclosure, the shooting method further includes:
changing the second marker indicating the region where the preset object with the highest priority is located in the plurality of first image frames to the first marker;
where the first marker is different from the second marker.

In some examples of the disclosure, the shooting method further includes:
in a case that the preset object is not recognized in the plurality of first image frames, displaying the first marker in a preset position of the plurality of first image frames.

In some examples of the disclosure, before displaying the plurality of first image frames and the first marker, the method further includes:
in response to a sixth operation, canceling display of the second marker; and
displaying the first marker based on a region of the plurality of first image frames where the sixth operation acts on. In other words, the displaying of the second marker is stopped and the first marker is displayed based on a region of the plurality of first image frames where the sixth operation acts on.

In some examples of the disclosure, the shooting method further includes:
in response to a seventh operation, canceling display of the first marker;
displaying the second marker, the second marker indicating the region where the preset object is located in the plurality of first image frames.

In some examples of the disclosure, the shooting method further includes:
acquiring a plurality of third image frames, the plurality of third image frames being sequentially connected with the plurality of first image frames, the plurality of third image frames including a plurality of first frames acquired over a first time duration, the plurality of first frames including the second object and not including the first object; and
moving the first marker from the region where the first object is located in the plurality of first image frames to the region where the second object is located in the plurality of first frames.

In some examples of the disclosure, the plurality of third image frames further include a plurality of second frames acquired over a second time duration, the plurality of second frames are sequentially connected with the plurality of first frames, the second frames include the first object and the second object;
the shooting method, further includes:
in a case where the first time duration is less than or equal to a preset time duration, moving the first marker from the region where the second object is located to the region where the first object is located in the plurality of second frames.

In some examples of the disclosure, the shooting method further includes:
making a ratio of the range of the first marker to the area of the plurality of first image frames greater than or equal to 1/2.

According to a second aspect of the examples of the disclosure, a shooting apparatus is provided, including:
an acquisition module, configured to acquire a plurality of first image frames in response to a first operation, the plurality of first image frames including a first object;
a display module, configured to display the plurality of first image frames and a first marker, where the first marker is located in a region where the first object is located, and the first marker indicates that the region where the first marker is located in the plurality of first image frames is being used as a video capture region to generate a video; and
a generating module, configured to generate a video from images of the video capture region in the plurality of first image frames.

According to a third aspect of the examples of the disclosure, an electronic device is provided, including:
a camera;
a processor; and
a memory, configured to store processor-executable instructions;
where the processor is configured to execute the executable instructions in the memory to implement the shooting method provided in the first aspect of the disclosure.

According to a fourth aspect of the examples of the disclosure, there is provided a non-transitory computer-readable storage medium having stored executable instructions, when the executable instructions are executed by a processor, the shooting method provided in the first aspect of the disclosure is implemented.

Adopting the above method of the disclosure has the following beneficial effects: the shooting method of the disclosure includes: during video shooting, acquiring a plurality of first image frames in response to a first operation; displaying the plurality of first image frames and a first marker, showing a video capture region in the plurality of first image frames with the first marker; taking the images of the video capture region in the plurality of first image frames as the images to be recorded in the shooting process, and automatically adjusting a proportion of a shooting picture to make the recorded images more clear, thus helping the user to shoot a more professional and natural high-quality video, and satisfying the user's demand for video shooting.

It is understood that the above general description and the following detailed description are only illustrative and interpretive, and cannot limit the disclosure.

### BRIEF DESCRIPTION OF THE DRAWINGS

The accompanying drawings, which are incorporated in and constitute a part of this specification, illustrate the examples consistent with the disclosure and together with the description, serve to explain the principles of the disclosure.
FIG. 1 is a flowchart illustrating a shooting method according to an example.
FIG. 2-1 is a schematic diagram illustrating a shooting method according to an example.
FIG. 2-2 is a schematic diagram illustrating a shooting method according to an example.
FIG. 3 is a flowchart illustrating a shooting method according to an example.
FIG. 4-1 is a schematic diagram illustrating a shooting method according to an example.
FIG. 4-2 is a schematic diagram illustrating a shooting method according to an example.
FIG. 4-3 is a schematic diagram illustrating a shooting method according to an example.
FIG. 5-1 is a schematic diagram illustrating a shooting method according to an example.
FIG. 5-2 is a schematic diagram illustrating a shooting method according to an example.
FIG. 5-3 is a schematic diagram illustrating a shooting method according to an example.
FIG. 6-1 is a schematic diagram illustrating a shooting method according to an example.
FIG. 6-2 is a schematic diagram illustrating a shooting method according to an example.
FIG. 6-3 is a schematic diagram illustrating a shooting method according to an example.
FIG. 7 is a flowchart illustrating a shooting method according to an example.
FIG. 8-1 is a schematic diagram illustrating a shooting method according to an example.
FIG. 8-2 is a schematic diagram illustrating a shooting method according to an example.
FIG. 8-3 is a schematic diagram illustrating a shooting method according to an example.
FIG. 9 is a flowchart illustrating a shooting method according to an example.
FIG. 10-1 is a schematic diagram illustrating a shooting method according to an example.
FIG. 10-2 is a schematic diagram illustrating a shooting method according to an example.
FIG. 10-3 is a schematic diagram illustrating a shooting method according to an example.
FIG. 10-4 is a schematic diagram illustrating a shooting method according to an example.
FIG. 10-5 is a schematic diagram illustrating a shooting method according to an example.
FIG. 11 is a block diagram illustrating a shooting apparatus according to an example.
FIG. 12 is a block diagram illustrating an electronic device according to an example.

### DETAILED DESCRIPTION

Examples, instances of which are shown in the drawings, will be explained in detail here. When the following description involves drawings, the same numbers in different drawings represent the same or similar elements unless otherwise stated. The embodiments described in the following examples are not representative of all embodiments consistent with the disclosure. Rather they are only examples of devices and methods consistent with some aspects of the disclosure as detailed in the appended claims.

It is noted that the first to seventh operations referred to in this disclosure are merely names of the operations for convenience of description, and the names are independent of the importance of the operations and the order of the operations and do not further define the specific implementation of the operations.

In the digital era, cameras have become an integral part of the lives of many people. The camera function in the electronic device is not limited to shooting still photos with the camera, but also can be used to shoot videos and real-time streaming media.

However, at present, the shooting modes provided by the electronic devices are relatively single, and generally, the images acquired by the cameras are directly recorded into videos. In the images acquired by the cameras, there will be various characters, sceneries, animals, etc., but some of which are not the objects that users want to record videos, as a result, the users cannot shoot the desired effect, and the user experience is not good.

In other words, currently, camera functions of some electronic devices on the market support control of the focus position and zoom factor by gestures, and some also support real-time tracking of shot objects. Currently, the electronic device can provide a relatively single shooting manner, cannot shoot a video having the visual effect of a movie, cannot meet the high demand of the user for the video recording effect, and the user has a poor shooting experience.

The disclosure provides a shooting method. In the process of using an electronic device to shoot a video by the user, a preview picture (i.e., a plurality of first image frames recorded later) can be displayed on a display interface, in the preview picture, a focus emphasis object can be automatically captured, the user can also set the focus emphasis object according to his own wishes, the focus emphasis object can be highlighted by a first marker in the preview picture, so that the user can clearly know which object in the preview picture is shot as the focus emphasis object in the current shooting process, and during the shooting process, the whole preview picture is not shot, but only the focus emphasis object in the preview picture is shot, so that the focus is always kept on the shot object, other objects in the preview picture cannot be recorded, so that the recorded image is clearer and more accurate, and the shot picture has a movie recording effect. In the recording process, only the focus emphasis object in the preview picture is shot. In order to ensure the visual experience of the user, the proportion of the shot picture can be automatically adjusted in the subsequent playing process, which helps the user shoot more professional and natural high-quality videos and meets the demand of the user for video shooting.

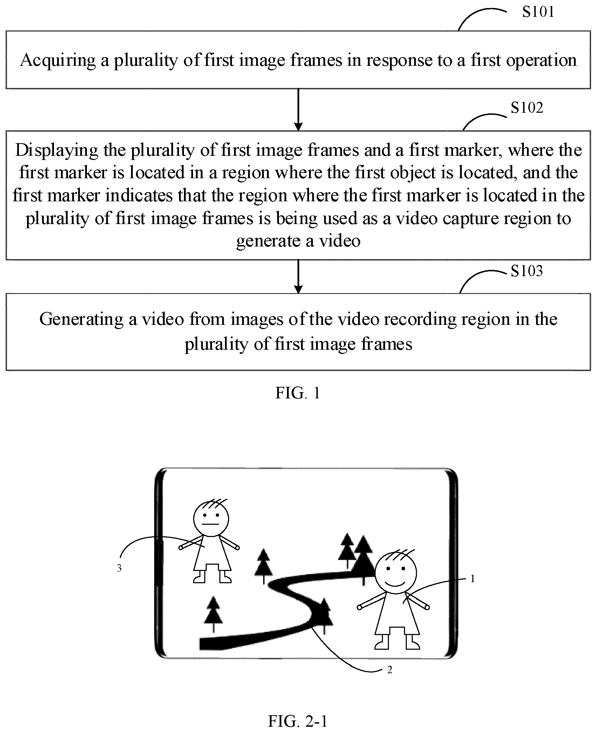

An example of the disclosure provides a shooting method applied to an electronic device having a camera, and the electronic device may be an intelligent electronic device having a camera, such as a mobile phone, a tablet computer, a notebook computer, or the like. As shown in FIG. 1, the shooting method shown in the disclosure, includes:
S101, a plurality of first image frames are acquired in response to a first operation;
S102, the plurality of first image frames and a first marker are displayed, the first marker is located in a region where the first object is located, and the first marker indicates that the region where the first marker is located in the plurality of first image frames is being used as a video capture region to generate a video; and
S103, a video is generated from images of the video capture region in the plurality of first image frames.

In step S101, the user can make the electronic device enter the shooting function interface through a touch control instruction, a voice instruction, a gesture instruction, etc., and the electronic device starts the camera and uses the camera to view. When the user triggers the electronic device to start a shooting function through a first operation such as touch control, voice, gesture, etc., the electronic device captures a plurality of first shot image frames, and characters, sceneries, animals, articles, etc. may be included in the first image frames.

In one example, the first operation may be an operation to start a camera application, and the first operation may be an operation to start the camera application without triggering a shooting function to generate a video through the video capture region later, and the shooting function of generating the video through the video capture region is subsequently started by other operations. In another example, if the camera application has been started, the first operation is an operation that can directly start the shooting function of generating the video through the video capture region, for example, the first operation can be a click operation, a double-click operation or a long-press operation of a shooting button (such as a shutter) by a user. For another example, the first operation may also be a voice instruction of "Turn on Movie Mode Recording" or "Start Video Capture Area Recording" output by the user voice.

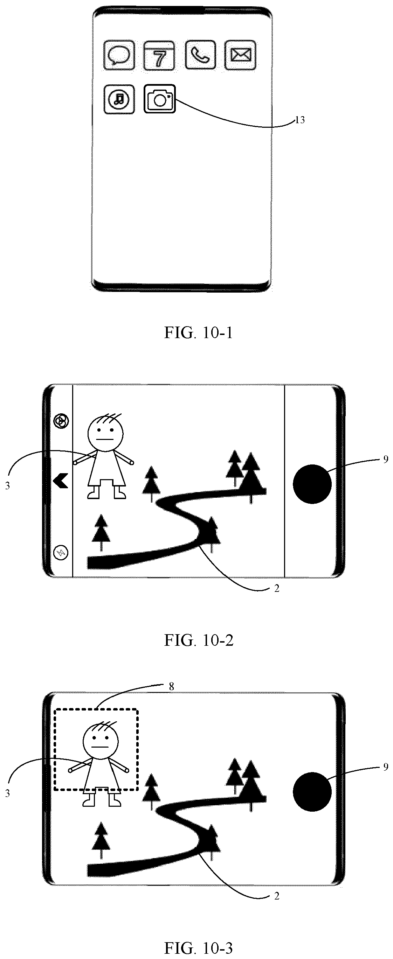

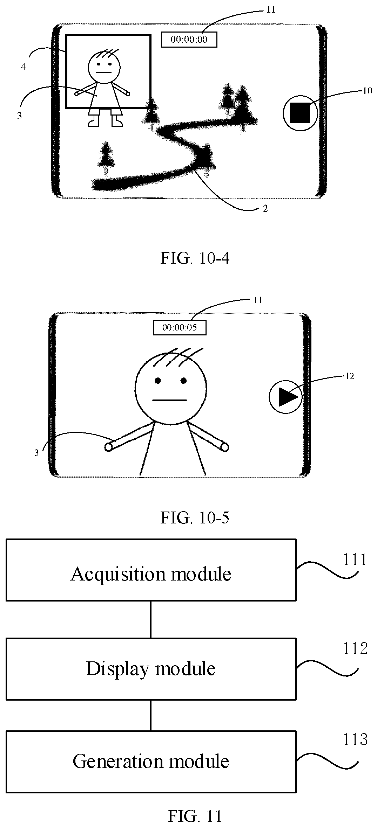

As shown in FIG. 10-1, the electronic device is currently in a desktop display interface, the user clicks a camera application icon 13, the electronic device enters an application interface of the camera, the camera is automatically turned on, the screen displays the menu bar of the shooting function and the picture viewed by the camera, including a second character 3 and a scenery 2, as shown in FIG. 10-2, at this moment, the electronic device only views the current picture, but does not enter the shooting process, and only when the user clicks the recording button 9, the electronic device starts the real shooting and recording process, as shown in FIG. 10-4. Clicking the recording button 9 is considered to be a first operation, and after receiving this operation, the camera starts image capture to capture a plurality of first image frames.

In step S102, the electronic device displays the plurality of captured first image frames as a preview picture in which all images captured by the camera are displayed. The electronic device can automatically recognize and capture, for example, characters, animals, etc. in the preview picture, and then recognize a focus emphasis object from these captured objects according to the preset rules pre-existed in the electronic device as the first object, that is, a focus request can be sent to a control apparatus of the electronic device by a relevant sensor on the camera, for example, the character located in the center of the preview picture is taken as a first object. For another example, according to the depth of field information, the task or animal closest to the electronic device in the preview picture is taken as the first object. Of course, the first object can also be set by the user himself. For example, there are a plurality of objects in the preview picture, and the user can click on an article an animal or a character in the preview picture to send out a focus emphasis request, so that the clicked object is set as the first object in the preview picture.

In response to determining that there are a plurality of targets in the picture, that is, when there are animals or other subjects such as human faces, human heads, human bodies, cats and dogs in the picture at the same time, the user can touch and select the object he wants to focus on and focus it as the first object. The first object to be focused may also be determined by the electronic device according to the pre-stored focus tracking priority for focusing. The focus tracking priority is touch focusing > character > pet > center (the middle position of the picture). In order to ensure that the focusing object will not be changed due to the action change of the character in the preview picture during the shooting process, the electronic device uses an algorithm to perform association recognition on the face, head and body of the character, and outputs them as a focusing object with the same ID, thus avoiding the situation that the character rotates the head and the focusing object is switched under the condition that the face is not recognized. In response to determining that there are a plurality of human bodies in the preview picture, the electronic device will determine the focus tracking priority according to the sizes of the human bodies and depth of field in the preview picture. For example, in the preview picture, the character closer to the electronic device is set as the highest focus tracking priority, and the focus tracking priority of the character farther away from the electronic device is reduced.

For example, the user sets the focus emphasis object by touch control, when the user determines the first object, the focus emphasis request is triggered. In response to the focus emphasis request for the first object, the electronic device displays a first marker in the region where the first object is located, and the first marker indicates that the region where the first object is located in a plurality of first image frames is used as a video capture region for generating a video. The first marker can be displayed on the screen in the shape of a box, an elliptical box, a triangular box, and the color of the first marker can be black, white, yellow, and the like.

The first marker shows the range of the video capture region, the range is determined by the size of the first marker, the size of the first marker can be adjusted by the user as desired, can be used according to the default set size of the electronic device, and can be adjusted by the electronic device according to the size of the first object emphasized in focus. For example, it is determined that the first object in focus is a character, in response to determining that the user wants to emphasize the face of the character, the size of the first marker can be adjusted to coincide with the size of the face of the character in the preview picture, the first marker shows only the face of the first object; in response to determining that the user wants to emphasize the entire human body, the size of the first marker can be adjusted to correspond to the body size of the character in the preview picture, and the first marker shows not only the face, the head, but also the body of the first object.

The plurality of first image frames (i.e., the preview images) displayed on the screen are not images recorded during the video shooting process, and the plurality of first image frames are displayed in order to make the user aware of the entire preview picture content and to allow the user to determine the object to be emphasized in focus. The image range in a plurality of first image frames defined by the first marker is the image recorded in the video shooting process, that is, the first marker has a cropping function, and the image emphasized in focus is cropped in the plurality of first image frames. It is emphasized that the first marker and the plurality of first image frames are not in the same display layer, so it can be considered that the first image frame belongs to a first display layer, and the first marker belongs to a second display layer. In the process of displaying on the screen, the first display layer and the second display layer are superimposed and displayed, and the final displayed effect is that the contents in the first display layer and the second display layer are displayed without difference, bringing the overall display effect to the user. The second display layer where the first marker is located is displayed above the first display layer, the first marker is located in the region where the first object is located in the plurality of first image frames, and is only used to highlight the first object in the plurality of first image frames and mark the current video capture region, and the existence of the first marker does not affect the picture content of the plurality of first image frames.

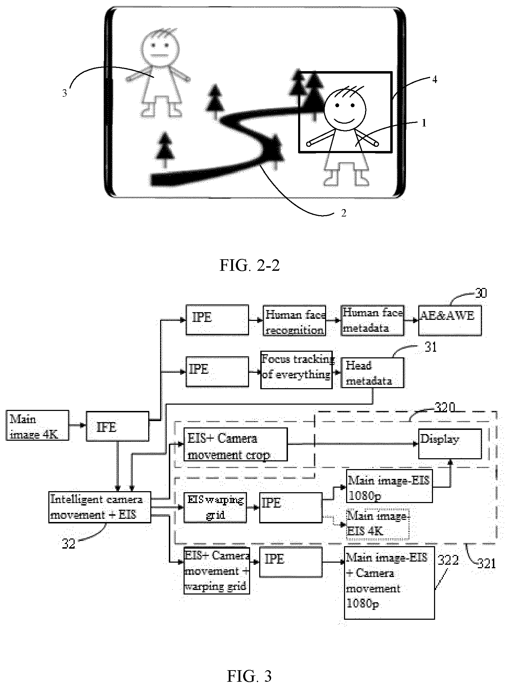

As shown in FIG. 2-1, the plurality of first image frames shot by the electronic device using a camera include a first character 1, a scenery 2, and a second character 3. In FIG. 2-2, a user selects the first character 1 as a first object by touch control, the electronic device displays a first marker 4 at the first character 1 of a plurality of first image frames on the screen in response to focus emphasis on the first object, the first marker 4 is displayed in the form of a black box, the first marker 4 displays the face region of the first character 1, and the face region of the first character 1 in the first marker 4 is taken as an image recorded during the video shooting process. In response to determining that the first object is always the first character 1 during the video shooting process, the size of the first marker 4 is unchanged, and the face of the first character 1 is always displayed, the final recorded image only includes the face of the first character 1, and the facial expression change of the first character 1 can be clearly displayed.

In step S103, in a case that the electronic device only has a single camera, the electronic device uses the same camera to shoot the current picture and the images of the video capture region in the plurality of first image frames, and generates a video according to the images of the video capture region in the plurality of first image frames. It can be considered that the camera shoots a plurality of first image frames, and then cuts the first video frames through the region indicated by the first marker, and only records the video in the region indicated by the first marker. When the recorded video is played later, only the recorded region indicated by the first marker is played. In a case that the electronic device includes two or more cameras, the electronic device can use one of the cameras (the first camera) to capture a plurality of first image frames, and, after the user determines the focus emphasis object (the region where the first marker is located), use other cameras (the second cameras) other than the first camera to shoot the image frames of the video capture region defined by the first marker, and the electronic device generates a video according to the image frames of the plurality of video capture regions captured by the second cameras. Of course, in a case that the electronic device has a plurality of cameras, the electronic device can also use the same camera to shoot the current picture and the images of the video capture region, and then record the images of the video capture region to generate a video.

In order to better explain the shooting method referred to in the disclosure, the shooting process of the electronic device is explained. FIG. 3 is a flow chart of a shooting process, and the specific flow is introduced below.

IFE refers to an Image Front-End Processor, and IFE is a core component of a camera to process images. The main tasks of IFE include: reading original data from the CMOS image sensor, carrying out a series of front-end processing, such as denoising, color correction, white balance, lens distortion correction, noise reduction, sharpening, etc., and finally outputting high-quality image data for subsequent image processing and coding. IFE is an important component of the camera. It improves the image quality and definition through front-end processing on the original image data, and provides high-quality data for subsequent image processing and coding. BPS refers to a Bayer Processing Segment. This hardware module is mainly used for bad point removal, phase focusing, mosaic removal, down sampling, and HDR processing of the shot image data and Bayer hybrid noise reduction. The processing of IFE and BPS is more inclined to the front end, that is, the most fundamental calibration compensation for the newly obtained image.

IPE refers to an Image Processing Engine, and the IPE includes a Noise processing segment (NPS) and a Post processing segment (PPS), and the IPE performs preliminary processing such as denoising, filtering, and the like on an image. The IPE can output YUV (color coding) to preview and video, and output JPEG (a static image) to Snapshot, so the IPE can output Display, video or JPEG at a time.

In the flowchart of FIG. 3, a first flow 30 is that the electronic device recognizes the human face existing in each video frame through the face recognition algorithm during shooting, records the coordinate information of the position of the human face, and obtains the face metadata, thus assisting the calibration of AE (Auto Exposure) and AWB (Automatic White Balance). In a second flow 31, the head metadata is obtained through the focus tracking function of everything (in response to determining that the user double-clicks the detected object, the boundary range of the object that the user wants to track is automatically recognized and locked), and the head metadata is used as the input information of an intelligent camera movement module in the third flow 32 to assist the intelligent camera movement (that is, focus tracking through the head of the character).

A third flow 32 includes an intelligent camera movement module and an EIS (Electric Image Stabilization) module. The third flow 32 is divided into a first sub-flow 320, a second sub-flow 321, and a third sub-flow 322, the first sub-flow 320 displays a camera movement frame (i.e., the first marker) that is currently taking a video by means of EIS technology and camera movement cropping. The second sub-flow 321 selects suitable resolution (e.g., 1080p, 4K, etc.) by EIS warping grid and IPE to perform video preview display, that is, the images processed through the first sub-flow 320 and the second sub-flow 321 are the images displayed on the screen (i.e., a plurality of first image frames as preview images and a plurality of second image frames for recording and subsequent playback, which will be described later in detail). The results of the first sub-flow 320 and the second sub-flow 321 are simultaneously input and displayed on the screen of the electronic device, that is, the second sub-flow 321 outputs the video preview effect at the current appropriate resolution, and the first sub-flow 320 displays the contents of focused shooting in the region where the first marker is located in the plurality of first image frames and being used as a video capture region (i.e., the first marker 4 in FIG. 2-2). Because the image quality needs to be sacrificed when enlarging the focused subject, in order to ensure that the final recorded image can have clear image quality, the initial main image (i.e., the image in the shooting process of the camera) needs to select high resolution, so that the finally displayed enlarged image (i.e., a plurality of second image frames) and a plurality of first image frames as preview images can also have relatively clear image quality, for example, the initial main image selects 4K resolution, the picture after being cropped by camera movement becomes 1080P, and the electronic device displays a plurality of first image frames and a plurality of second image frames in the first marker at 1080P. The third sub-flow 322 obtains a recorded image with appropriate resolution after EIS and camera movement cropping by the EIS, camera movement warping grid and IPE, the recorded image is the picture of the region where the first marker is located in the video preview.

In the disclosure, the electronic device acquires a plurality of first image frames in response to a first operation; displays the plurality of first image frames and a first marker, displays a video capture region in a plurality of first image frames with the first marker, guides a user to select a shot object, and keeps the focus always on the shot object that the user wants to make focus emphasis on to make the recorded images more clear and have a movie shooting effect, takes the images of the video capture region as the images to be recorded in the shooting process, and automatically adjusts a proportion of a shooting picture, thus helping the user to shoot a more professional and natural high-quality video, and satisfying the user's demand for video shooting.

In some examples, in response to a second operation, the first marker is gradually moved from the region where the first object is located to a region where a second object is located in the plurality of first image frames.

In the shooting process, the user can change the focused object to be shot by a second operation such as touching the screen based on the shooting needs. The electronic device selects, in response to the second operation, an object at a position where the second operation acts on the plurality of first image frames as the most recent object for focus emphasis, i.e., the second object, and gradually moves the first marker from a region where the first object is located to a region where the second object is located in the plurality of first image frames. For example, the second operation may be that the user clicks a region where the second object is located in a plurality of first image frames. For another example, the second operation can be a sliding touch control operation in which the user holds down the region where the first object is located with a single finger and slides to the region where the second object is located.

It is noted that the process of moving the first marker from the region where the first object is located to the region where the second object is located in the plurality of first image frames is not an instantaneous action, but the first marker is gradually moved from the region where the first object is located to the region where the second object is located. In the process of moving the first marker, according to the depth of field change of the first object and the second object, the electronic device realizes the smooth transition of the bokeh effect by using the bokeh transition and automatic focusing technology, that is, the first marker displays not only the first object before moving and the second object after moving, but also the picture content between the first object and the second object in the plurality of first image frames.

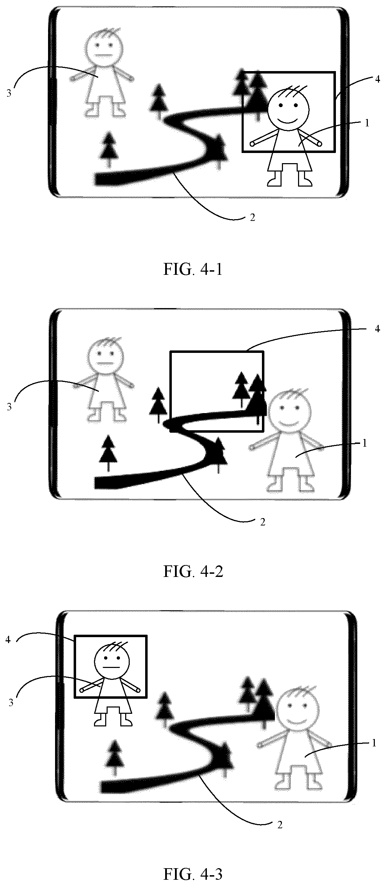

For example, the process of gradually moving the first marker from the region where the first object is located to the region where the second object is located in the plurality of first image frames corresponds to FIG. 4-1 to FIG. 4-3. In FIG. 4-1, in response to the first operation, the first marker 4 in the plurality of first image frames focuses on the first object (the first character 1), which may be a focus emphasis object determined by the electronic device. The user selects the second character 3 as the new focus emphasis object, i.e., the second object, by touching the screen (the second operation), in response to the second operation, the electronic device gradually moves the first marker 4 from the position where the first character 1 is located to the position where the second character 3 is located. In the plurality of first image frames, there is also a scenery 2 between the first character 1 and the second character 3, so that during the movement of the first marker 4, the first marker 4 moves to the region where the scenery 2 is located, as shown in FIG. 4-2. In response to determining that the first marker 4 moves to the second character 3, the first marker 4 indicates the region where the second object (the second character 3) is located as the video capture region to generate a video, as shown in FIG. 4-3.

In addition, the second operation can also be triggered by the electronic device based on the captured picture change. For example, the electronic device is in a fixed state, and a plurality of first image frames captured by the camera include two objects, an adult and a child. At time t1, the electronic device focuses and emphasizes the child closest to the camera as the first object. The child in the picture runs in the direction away from the camera, the distance between the child and the camera exceeds the distance between the adult and the camera at time t2, thus triggering a second operation, and the electronic device takes the adult closest to the camera as the second object to focus and emphasize at time t3 based on the second operation, and in the time period between time t2 and time t3, the first marker is gradually moved from the region where the first object is located to the region where the second object is located.

In order to make the focus switching process more natural during video shooting, the electronic device can automatically perform a smooth transition effect during the movement of the first marker based on the second operation. Focus switching and smooth transition can be realized by one of the following technical methods:
first, a large number of video materials with marked focus information are used to train deep learning models, such as Convolutional Neural Networks (CNN) or a Recurrent Neural Network (RNN). The deep learning models are used to recognize focus regions and non-focus regions in videos. In the training process, the depth learning model learns to extract visual features such as color, texture and edge of video frames, as well as depth information related to the focus. In the actual shooting situation, the electronic device obtains continuous video frames based on the sensor of the camera, inputs these video frames into the trained depth learning model, and recognizes the focus of each video frame. When the focus region is recognized, the intelligent focus switching algorithm tracks the focus position and predicts the focus position of the next video frame. By calculating the smooth transition between focus positions, the coherence and naturalness of the focus switching process are ensured. The intelligent focus switching algorithm can automatically adjust the shooting parameters of the camera, such as focusing distance, exposure and white balance, to adapt to different focus positions and scenes.

In the disclosure, the electronic device gradually moves the first marker from the region where the first object is located to the region where the second object is located based on the second operation, so as to avoid the abrupt jump of the shot picture between the first object and the second object, provide the film shooting effect, make the recorded video more stable and vivid, realize the smooth movement of the visual field picture, make the video picture more comfortable, and improve the quality and attraction of the video.

In some examples, a plurality of second image frames are displayed, the plurality of second image frames showing images of the region where the first marker is located in the plurality of first image frames.

Since the plurality of first image frames are not images recorded during the video shooting process, the image of the region where the first marker is located in the plurality of first image frames is the image recorded during the video shooting process. In order to enable the user to preview the recorded image, the image recorded during the video shooting process is displayed on the second region of the screen, that is, the image in the video capturing region in the plurality of first image frames is displayed.

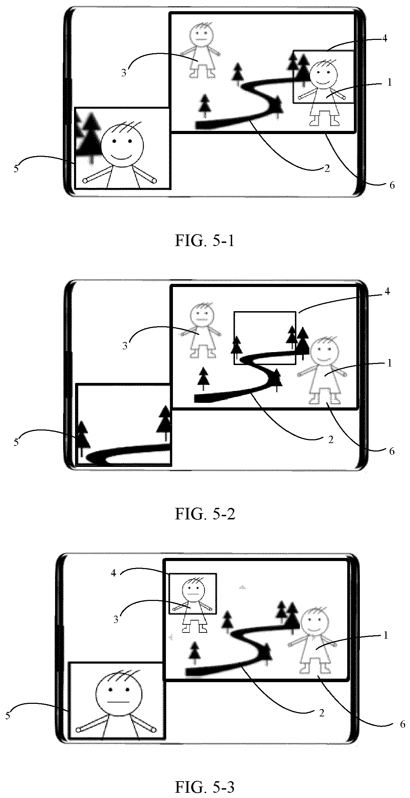

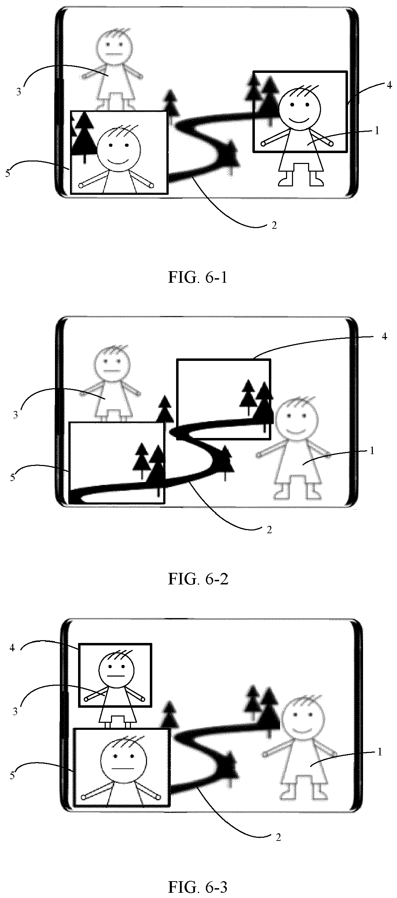

As shown in FIGS. 5-1 to 5-3, each of the first region 6 and the second region 5 occupies a region of the screen, the first region 6 displays the plurality of first image frames and the first marker 4, and the plurality of second image frames displayed in the second region 5 are the images of the region where the first marker 4 is located in the plurality of first image frames, i.e., the images of the video capture region. The positions of the first region and the second region on the screen are not fixed, for example, in FIG. 5-1 to FIG. 5-3, the first region 6 is placed at the upper right corner region of the screen and the second region 5 is placed at the lower left corner region of the screen, and the user can also adjust the positions of the first region and the second region according to the visual habits of the individual, place the first region at the lower right corner region of the screen and place the second region at the upper left corner region of the screen. In addition, the second region may also exist in the form of a floating window, as shown in FIG. 6-1 to FIG. 6-3, all the display region of the screen is the first region, i.e., the plurality of first image frames are displayed in the full screen mode, the second region 5 is always located at the upper layer of the first region, and a partial region of the first region is occluded.

In some examples, in the process that the first marker in the plurality of first image frames is gradually moved from a region where the first object is located to a region where the second object is located, the images shown in the plurality of second image frames change as the region where the first marker is located changes. In a case where a plurality of second image frames are displayed on the screen of the electronic device, since the plurality of second image frames are the images of the region where the first marker is located in the plurality of first image frames, and the movement of the first marker from the region where the first object is located to the region where the second object is located is not a momentary action, so that in the case where the first marker is gradually moved from the region where the first object is located to the region where the second object is located, the content displayed in the plurality of second image frames on the second region changes with the movement of the first marker.

As shown in FIGS. 5-1 to 5-3, the first region 6 displays a plurality of first image frames in which the first character 1 is a first object and the second character 3 is a second object, and the plurality of first image frames further include a scenery 2. Based on the second operation, the first marker 4 is gradually moved from the first character 1 to the second character 3, i.e., corresponding to the process of FIG. 5-1 to FIG. 5-3, the plurality of second image frames in the second region 5 change with the movement of the first marker 4, in FIG. 5-1, the plurality of second image frames show the first character 1; in FIG. 5-2, the plurality of second image frames show the scenery 2; in FIG. 5-3, the plurality of second image frames show the second character 3. Thus, in a procedure in which the focus emphasis object of the video recording changes from the first object to the second object, a smooth transitional shooting effect is formed, and an image in the shot video is prevented from suddenly changing from the first object to the second object.

In the disclosure, the screen simultaneously displays the first region and the second region, the plurality of first image frames are displayed in the first region, and the image recorded in the video shooting process is displayed in the second region, so that a user can preview the final recorded image, which is convenient for the user to adjust the image content in time according to the demand, provides a more convenient, efficient and intelligent shooting experience for the user, and improves the video quality.

In some examples, in response to the third operation, the size of the first marker is adjusted.

The electronic device can set the size of the first marker at the factory, and in response to the first operation, the electronic device displays the first marker at a default size on the plurality of first image frames. Since the region where the first marker is located is the video capture region in the plurality of first image frames, and the final video is generated according to the image of the video capture region, the size of the first marker determines the range of the video capture region, that is, determines the picture content of the plurality of second image frames, so that the user can adjust the size of the first marker based on the demand for recorded images. The user can adjust the size of the first marker by using the touch control instruction generated by the third operation, and can also adjust the size of the first marker by using a voice instruction and a gesture instruction. In a case that the user changes the range of the first marker by a third operation such as a touch drag instruction with a plurality of fingers, the electronic device changes the size of the first marker on a plurality of first image frames in response to the third operation. For example, the third operation can be simultaneous touching of the region where the first marker is located by two fingers of the user and the two fingers do an outward pushing movement to enlarge the size of the first marker. For another example, the third operation can be that three fingers of the user touch the region where the first marker is located at the same time and the three fingers do an inward pulling movement to reduce the size of the first marker. For another example, a virtual control for adjusting the size of the first marker is displayed on the preset display interface, the first control is used for increasing the size of the first marker, the second control is used for reducing the size of the first marker, when the user touches the first control, the size of the first marker is enlarged, and when the user touches the second control, the size of the first marker is reduced. The first marker is increased or decreased by the same size each time by touching the first control and the second control. When the user presses the first control for a long time, the size of the first marker increases continuously, the user stops pressing the first control, and the size of the first marker is locked and no longer increases. When the user presses the second control for a long time, the size of the first marker is continuously reduced, the user stops pressing the second control, and the size of the first marker is locked and is no longer reduced.

For example, when the user wants to take a picture of the play of a pet dog, the pet dog is taken as the first object, the first marker is displayed on the plurality of first image frames on the screen of the electronic device, the region where the first marker is located is the whole body shape of the pet dog in the plurality of first image frames, and after shooting for a period of time, the user wants to focus and emphasize the face of the pet dog to record the mood of the pet dog, so that a third operation is performed, for example, two fingers act on the region where the first marker is located and the two fingers move relative to each other in opposite directions. In response to determining that the electronic device detects the third operation, the size of the first marker is reduced on the plurality of first image frames, so that the range defined by the first marker only includes the face region of the pet dog, and the face of the pet dog in the plurality of first image frames is taken as the video capture region.

In addition, the electronic device may also automatically change the size of the first marker by recognizing a focus emphasis object in the plurality of first image frames. For example, in a case that the first object is a character, the electronic device changes the size of the first marker from a default value to a size consistent with a human body according to the size of the human body in the plurality of first image frames, in a case that the second object is a pet dog, the electronic device then changes the size of the first marker to a size consistent with a body type of the pet dog from the size consistent with the human body.

Since the region where the first marker is located is used as the video capture region, the images of the video capture region in a plurality of first image frames are generated into a video, i.e., the recorded image is cropped from the plurality of first image frames according to the region where the first marker is located, so as to realize the scaling display of the focusing object. Hence, in order to ensure that the video obtained by final recording has good image quality, a ratio of the range of the first marker to the area of the plurality of first image frames needs to be greater than or equal to 1/2, and the VSR (Video Super Resolution) super-division algorithm is used to increase the image quality, so that the final recorded video can be clearly presented.

According to the disclosure, the electronic device changes the size of the first marker on a plurality of first image frames based on the operation of changing the range of the first marker, automatically adjusts the proportion of the shot object in the picture, and carries out close-up enlargement on the shot object, so as to help the user shoot a high-quality video and meet the shooting demand of the user.

In some examples, other regions in the plurality of first image frames except the region where the first marker is located are blurred.

In order to be able to highlight the image of the region where the first marker is located in the plurality of first image frames, other regions in the plurality of first image frames except the region where the first marker is located are blurred, and the plurality of first image frames in the region where the first marker is located are always displayed in a clear state.

Alternatively, the blurring process for regions other than the first marker in the first image frames may be triggered automatically after the first marker is displayed, or may be triggered manually based on the user's own demand. For example, the electronic device blurs regions other than the first marker in the plurality of first image frames in response to the fourth operation. The fourth operation may be a voice operation sent by the user, a touch control operation of the user on the operation interface of the preset virtual control. For example, the electronic device may display a preset virtual control for triggering a blurring operation switch, the electronic device detects a triggering operation (i.e., a fourth operation, such as clicking the preset virtual control) on the preset virtual control, and the electronic device performs blurring display for regions other than the first marker in a plurality of first image frames in response to the triggering operation. As another example, the electronic device detects a preset gesture operation on the display interface (i.e., a fourth operation, such as pressing the first marker for a long time or pressing a region other than the first marker for a long time), and the electronic device blurs the regions other than the first marker in a plurality of first image frames in response to the preset gesture operation.

As shown in FIG. 2-1, in a case where the electronic device has not detected a fourth operation or in a case where the electronic device has not detected a first object in a plurality of first image frames, all the region of a plurality of first image frames on the screen is clearly presented. In FIG. 2-2, when a user determines a first character 1 as a first object, the first character 1 in a first marker 4 is clearly displayed, and other regions except the first marker 4, such as a scenery 2, a second character 3, etc. are blurred.

Blurred display is the depth of field effect, which blurs the background, highlights the clarity of the focusing subject, and creates a movie-like picture effect. The electronic device can complete blurred display through the intelligent depth of field effect. The intelligent depth of field effect can be achieved by one of the following technical methods:
first, an image containing depth information is acquired by a dual-camera or multi-camera system. Because the multi-camera system captures the image of the same scene at different positions, the depth information in the scene can be estimated by parallax calculation or structured light technology, and a depth map can be generated. Secondly, by using a depth learning model or an image segmentation algorithm, the foreground and background in the image are separated based on color, texture, edge and other features. According to the depth map and an image segmentation result, the positions of the foreground and background are determined. For the background image, an algorithm such as Gaussian blur or motion blur can be used to simulate the depth of field effect of the background under a large aperture. The foreground part usually needs to be kept clear, so it will not be blurred. In order to make the depth of field effect look more natural, a gradient or mixed blur technique is used to deal with the boundary between foreground and background, the boundary region is smoothed to make the transition between the foreground and the background more natural. In addition, some parameters are provided for the user to adjust later according to their needs, such as depth of field intensity, blur degree of the foreground and background boundaries, etc.

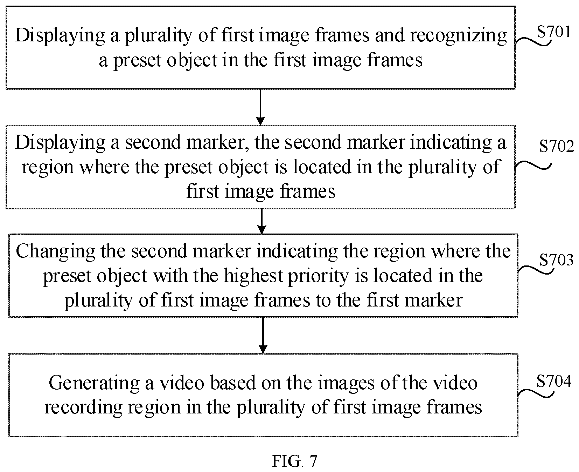

According to one example, as shown in FIG. 7, the shooting method in this example includes:
S701, a plurality of first image frames are displayed and a preset object is recognized in the first image frames;
S702, a second marker is displayed, the second marker indicating a region where the preset object is located in the plurality of first image frames;
S703, the second marker indicating the region where the preset object with the highest priority is located in the plurality of first image frames is changed to the first marker; and
S704, a video is generated based on the images of the video capture region in the plurality of first image frames.
Step S704 is the same as the embodiment in the above example, and will not be repeated here.

In step S701, the process of displaying the plurality of first image frames and recognizing the preset object in the first image frames can be triggered based on a first operation. The first operation can be, for example, a touch control operation on a shooting shutter. In response to determining that the shooting shutter is pressed, the plurality of first image frames are displayed in a display interface of the screen. In response to receiving the first operation, the automatic recognition process is automatically started to recognize the preset object in the plurality of first image frames.

After the plurality of first image frames are displayed based on the first operation, a recognition process of a preset object in the plurality of first image frames may also be started based on a fifth operation applied by the user to the electronic device. The fifth operation can be a gesture operation of the user to the screen of the electronic device, an operation inputted by the user through a voice mode, and an operation inputted by the user to select an option displayed on the display screen through a touch control mode. In a case that the user issues the fifth operation, the electronic device displays a plurality of first image frames on the screen based on the fifth operation and initiates an automatic recognition process. For example, the automatic recognition control is displayed on the preset display interface, and when the automatic recognition control receives the touch operation, it indicates that the user wants to start the automatic recognition process to recognize the preset image in a plurality of first video frames.

In the process of automatic recognition, a plurality of targets in the plurality of first image frames will be automatically recognized. In the process of recognition, face recognition can be used to automatically recognize characters in the plurality of first image frames. A neural network model capable of recognizing preset objects such as characters, animals, insects and articles can also be trained in advance by the neural network, so that the preset objects in the plurality of first image frames can be automatically recognized by using the neural network model. The first object as a focus emphasis object can be automatically tracked, and even if the first object is continuously moved in a plurality of first image frames, the first marker will always follow the first object.

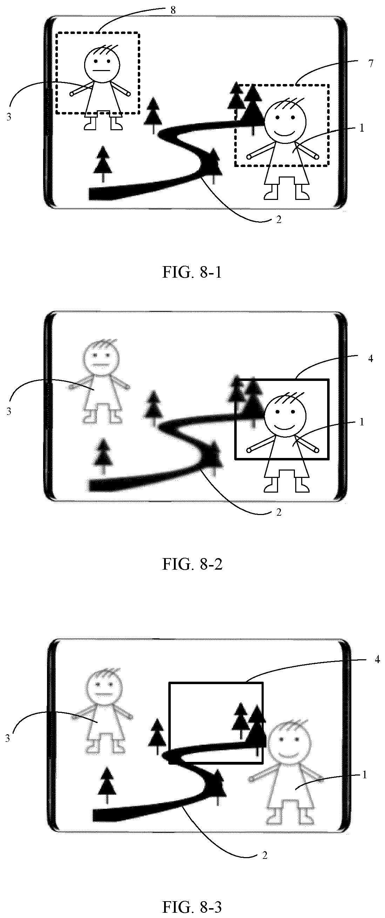

In step S702, the automatic recognition refers that the electronic device displays the recognition result in the plurality of first image frames on the screen based on the object focus tracking function, and displays the recognition result with a second marker in the region where the recognition result is located. The object focus tracking function can be understood as the function of tracking the preset objects all the time during the continuous movement of these preset objects after recognizing the preset objects in a plurality of first image frames. In the automatic recognition process, the electronic device recognizes preset objects in a plurality of first image frames, the preset objects include characters, animals, etc., and may also include other items set for recognition by a user. in a case that the electronic device recognizes the preset objects, it will display a second marker in the region where each preset object is located, and the second marker can be a geometric outer frame in a color such as white, black, yellow, or the like. As shown in FIG. 8-1, a plurality of first image frames include a first character 1, a scenery 2 and a second character 3. In response to determining that two preset objects, the first character 1 and the second character 3, are recognized in the automatic recognition process, a second marker 7 in the black dotted line pattern is displayed in the region where the first character 1 is located, and a second marker 8 in the black dotted line pattern is displayed in the region where the second character 3 is located.

In step S703, after the preset objects are automatically recognized, the electronic device takes the preset object with the highest priority in the plurality of first image frames as the focus emphasis object according to the pre-stored focus tracking priority, and displays a first marker in the region where the preset object with the highest priority is located. The focus tracking priority has been described in step S102 and will not be described here. After the focus emphasis object is determined, the first marker is displayed in the region where the focus emphasis object is located, and the second markers of the regions where other preset objects are located can be canceled or displayed together with the first marker. Since the first marker is different from the second marker, even if the first marker and the second marker are displayed at the same time, confusion does not occur.

As shown in FIG. 8-2, the first character 1 is determined as the focus emphasis object according to the focus tracking priority, the second marker 7 in the region where the first character 1 is located is changed to display the first marker 4, and the second marker 8 displayed in the region where the second character 3 is located is canceled, and the first marker 4 is displayed in a black solid line pattern. For another example, the first marker may also be displayed in a yellow box, and the second marker may be displayed in a white box.

In some examples, in the case that the preset object is not recognized in the plurality of first image frames in the automatic recognition process, the first marker is displayed in a preset position of the plurality of first image frames.

In a case that the electronic device can not automatically recognize the preset object in a plurality of first image frames, the electronic device focuses at a preset position, and the camera fixes the current focusing distance and no longer automatically adjusts focusing. The preset position can be selected from the center of a plurality of first image frames or determined based on the selection of a user, and the preset position is not changed after the position is determined. The electronic device takes the picture corresponding to the preset position as a focusing object and displays a first marker at the preset position. For example, a user uses an electronic device to shoot a scenery map. A plurality of first image frames include mountains, water, trees, grass and the like, and the center position of the plurality of first image frames corresponds to a tree. Because there is no preset object such as a character or an animal in the plurality of first image frames, the preset object cannot be automatically recognized. The electronic device takes the preset position of the plurality of first image frames, that is, a tree in the plurality of first image frames as a focusing object, and displays a first marker in the region where the tree is located.

In some examples, in response to the sixth operation, display of the second marker is canceled; and
the first marker is displayed based on a region of the plurality of first image frames where the sixth operation acts on.

In addition to automatic recognition, the selection of the focusing object can also be manually selected by the user. In a case that the user manually selects the focusing object through the sixth operation (e.g. double-clicking the focusing object), the electronic device cancels the display of the second marker in the plurality of first image frames in response to the sixth operation, i.e., cancels the second marker in the region where the preset object is located in the automatic recognition process, and displays the first marker only in a region of the focusing object where the sixth operation acts on. For example, when a user double-clicks a third object in a plurality of first image frames (i.e., a sixth operation), it means that the user wants to use the third object as a focus emphasis object, thus canceling the plurality of second markers, and displaying only the first marker in the region where the third object is located, so as to emphasize that the third object is a focus emphasis object during shooting, and video capture is being carried out in the region where the third object is located.

As shown in FIG. 8-1 to FIG. 8-3, a plurality of first image frames taken by the electronic device include a first character 1, a scenery 2, and a second character 3. In FIG. 8-1, the preset objects recognized by the electronic device in the automatic recognition process are the first character 1 and the second character 3. The second marker 7 is displayed in the region where the first character 1 is located, and the second marker 8 is displayed in the region where the second character 3 is located. Since the object that the user wants to focus is the scenery 2, not the first character 1 and the second character 3, the focus is manually selected to the scenery 2. As shown in FIG. 8-3, the electronic device cancels the second marker 7 and the second marker 8 in the regions where the first character 1 and the second character 3 are located based on the sixth operation, and displays the first marker 4 in the region where the scenery 2 is located.

In some examples, in response to the seventh operation, the display of the first marker is canceled; and
a second marker is displayed, the second marker indicating a region where the preset object is located in the plurality of first image frames.

In a case where the electronic device displays a first marker on a plurality of first image frames, the first marker being displayed is canceled based on the received seventh operation. The first marker may be triggered based on the first operation or based on the sixth operation. In addition, it is noted here that all the first and second markers mentioned in the disclosure can be generated through triggering by a plurality of operations, for example, the second marker can be generated based on the seventh operation and the fifth operation, and is not limited to being generated through triggering by one operation, which will not be described in detail later.

When the user does not want to use the object currently emphasized by the first marker as the focus emphasis object, the focus emphasis on the first object can be canceled by a seventh operation. For example, the seventh operation may be that the user double-clicks the first marker, thus canceling the display of the first marker, i.e., the user can no longer see the first marker on the screen. When the first marker is canceled, the automatic recognition process is started to recognize preset objects in a plurality of first image frames and display a second marker in the region where each preset object is located, that is, the electronic device can switch from manual recognition to automatic recognition through a seventh operation. For another example, the user can cancel the first marker by pressing the first marker for a long time, so that the first marker is no longer displayed on the screen, and the automatic recognition process can be started by touching the automatic recognition control, and then the second marker is displayed on the screen to recognize the preset objects in a plurality of first image frames.

In some examples, the shooting method further includes:
a plurality of third image frames are acquired, the plurality of third image frames being sequentially connected with the plurality of first image frames, the plurality of third image frames including a plurality of first frames acquired over a first time duration, the plurality of first frames including the second object and not including the first object; and
the first marker is moved from the region where the first object is located in the plurality of first image frames to the region where the second object is located in the plurality of first frames.

Before realizing the shooting method in the example, the user starts the function of recording the video capture region, that is, in response to receiving the first operation, the electronic device automatically recognizes and determines the first object in a plurality of first image frames, and carries out image tracking. Of course, the user can also determine the first object to be focused and emphasized according to his own video recording wishes by a manual click operation. After the first object is determined, the electronic device tracks the first object. In addition, after the electronic device starts the automatic recognition function, in response to determining that the preset object in the plurality of first image frames is recognized, a second marker is displayed, and the second marker is used to identify the position of the preset object in the plurality of first video frames.

With the continuous progress of the video recording process, the electronic device continues to acquire a plurality of third image frames, and the plurality of third image frames are sequentially connected with the plurality of first image frames, namely, first, a plurality of first image frames are acquired, the third image frames are acquired at the moment when the last first image frame is acquired, and a plurality of third image frames are continuously acquired in a first time duration. The plurality of third image frames includes a plurality of first frames collected in the first time duration, and the plurality of first frames includes a second object but does not include a first object, that is, during video recording, the first object slowly moves out of the viewing frame from the viewing frame during the process of acquiring the plurality of first image frames and the plurality of first frames, so that the first object is no longer included in the plurality of third image frames acquired. At this time, because the object moves out of the viewing frame, the first object cannot be used as the focus emphasis object continuously, then the second object in the first frame can be automatically used as the focus emphasis object at this time, so that the first marker is moved from the region where the first object is located in a plurality of first image frames to the region where the second object is located in a plurality of first frames, so as to prompt the user to use the second object as the focus emphasis object at this time. After the first object moves out of the viewing frame, according to the preset rule, an object located in the center of the picture, or closer to the electronic device, or a moving object, etc. can be selected as the second object for focusing from a plurality of preset objects recognized in a plurality of first frames.

The electronic device uses a machine learning algorithm to recognize the first object and the second object, and continuously tracks the positions of the first object and the second object. On the one hand, it ensures that when the first object is a focusing object, the first object can always be clearly presented in the recorded video. On the other hand, it is ensured that when the first object moves out of the viewing frame during the shooting process, the focus emphasis object can be quickly switched to ensure the reliability of the video recording process.

Auto-focusing and tracking can be achieved by one of the following technical methods:
the electronic device is usually equipped with phase focusing or focusing pixel sensors, which are used to measure the focusing accuracy of different regions in the image. Firstly, these sensors are used to detect the contrast and phase differences in the image to determine the position of the focus. By using focusing algorithms, such as focusing mode selection, focusing point selection and focusing region tracking, the data obtained by the sensors are analyzed and calculated to obtain the contrast and phase differences in different regions of the image, as well as the best focus position. Once the best focus position is determined, the auto-focusing algorithm will realize auto-focusing by adjusting the lens position or focal length, that is, the motor of the camera is controlled or the optical elements are adjusted to keep the focus and the shot subject clear and sharp. In the shooting process, the auto-focusing algorithm can track the motion of the shot subject, and make auto-focusing adjustment as needed. The prediction algorithm and continuous focusing adjustment are used to ensure that the subject is always clear. In order to track the position of the subject more accurately, the auto-focusing and tracking algorithm can also use the computer vision technology, such as feature detection and target recognition, to detect the unique features of the subject and track according to these features, so that even if the subject moves or is partially occluded in the image, tracking can be kept.

Taking the first object as an example, in the process of tracking the first object, in a case that the first object moves out of the viewing frame (that is, the first object exceeds the shooting range of the camera), the electronic device starts the automatic recognition process, recognizes the preset objects in a plurality of third image frames and displays a second marker in the region where each preset object is located. For example, a plurality of first image frames include a character and a pet dog. In response to determining that the user manually selects the pet dog in the plurality of first image frames as a first object, the electronic device tracks the pet dog. Since the pet dog is in a running state, when the pet dog runs out of the shooting range of the camera (i.e., the pet dog runs out of the viewing frame), the electronic device can no longer track it. The electronic device continues to shoot a plurality of first frames without the pet dog, and the plurality of first frames only include a character. The electronic device starts an automatic recognition process to recognize the character, and displays a first marker in the region where the character is located, and the character is taken as a focus emphasis object.

In some examples, the plurality of third image frames further includes a plurality of second frames acquired over a second time duration, the plurality of second frames being sequentially connected with the plurality of first frames, the second frames including the first object and the second object; the shooting method further includes:
in a case where the first time duration is less than or equal to a preset time duration, the first marker is moved from the region where the second object is located to the region where the first object is located.in the plurality of second frames.

With the progress of the video shooting process, the second frame shooting is continued at the moment when the first frames are shot, and the second frames are acquired in the second time duration. In the second frame shooting process, the first object returns to the viewing frame again, and the shot second frames include the first object and the second object at the same time.

In a case that the first time duration is less than or equal to the preset time duration, the first marker is moved from the region where the second object is located to the region where the first object is located in a plurality of second frames, so as to continue video capture of the first object as a focus emphasis object. In the original first image frame acquisition process, the user's original intention is to use the first object as the focus emphasis object, but the second object in the first frames has to be used as the focus emphasis object because the first object moves out of the viewing frame. However, if the first object moves out of the viewing frame for a short time, the user's original intention does not change and still wants to use the first object as the focus emphasis object. In a case that the first object returns to the viewing frame in a plurality of acquired second frames, the second object is not used as the focusing object, but the first object is continuously recorded as the focusing object, which can effectively maintain the consistency of the focusing object.

The preset time duration can be set according to the camera performance of the electronic device, for example, it is set to be 3s and 5s. For example, a plurality of first image frames include a character and a pet dog, the user manually selects the pet dog in the plurality of first image frames as the first object, the electronic device tracks the pet dog, the pet dog is in a running state, and the pet dog runs out of the shooting range of the camera (i.e., the viewing frame) at time t5, then the time t5 lasts until time t6 to start acquiring a plurality of first frames, the plurality of first frames do not contain the pet dog, and the electronic device can no longer track it, and can only take the character as the focus emphasis object. The pet dog runs back to the shooting range of the camera at t6, and the second frames are acquired at t6. Since the time between t5 and t6 does not exceed the preset time duration of 3s, at t6, the electronic device rerecognizes the pet dog, takes the pet dog as the focus emphasis object again, cancels the first marker in the region where the character is located, and displays the first marker in the region where the pet dog is located.

In the disclosure, the electronic device tracks the motion track of the focusing object in real time based on auto-focus and tracking technology, guarantees that the focus always remains on the object that wants to be shot, makes the finally recorded video clearer, keeps the focusing object at the picture center, and makes the finally recorded video more stable and vivid.

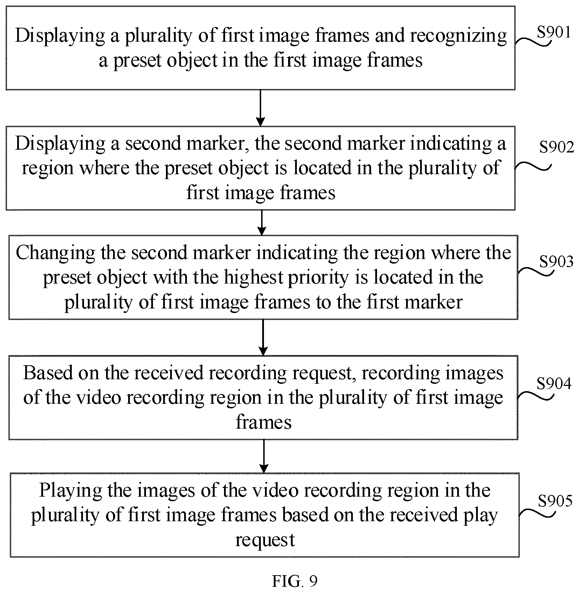

According to one example, as shown in FIG. 9, the shooting method in this example includes:
S901, a plurality of first image frames are displayed and an automatic recognition process is started;
S902, a second marker is displayed, the second marker indicating a region where the preset object is located in the plurality of first image frames;
S903, the second marker indicating the region where the preset object with the highest priority is located in the plurality of first image frames is changed into the first marker;
S904, based on the received recording request, images of the video capture region in the plurality of first image frames are recorded; and
S905, the images of the video capture region in the plurality of first image frames are played based on the received play request.

Steps S901-S903 are the same as the embodiment in the above example, and will not be repeated here.

In step S904, the electronic device turns on the camera for viewing, and the user can trigger the recording request through a touch control instruction, a voice instruction, a gesture instruction, etc. In response to determining that the electronic device receives the recording request, it will record the images of the video capture region in a plurality of first image frames. In the recording process, the camera can automatically track the focus emphasis object, smoothly move the visual field picture, and zoom in on the focus emphasis object. The user can also switch the focus emphasis object and adjust the size of the first marker by himself. In a case that the user selects a new focus emphasis object, the electronic device can realize the smooth transition of the bokeh effect. As shown in FIG. 10-3, a plurality of first image frames include a scenery 2 and a second character 3. The electronic device automatically recognizes the preset object, i.e., the second character 3, and displays a second marker 8 in the region where the second character 3 is located. Because only one preset object is automatically recognized, the second character 3 is regarded as the focus emphasis object. The screen has a recording button 9. When the user clicks the recording button 9, as shown in FIG. 10-4, the electronic device will record the second character 3 in the region where the first marker 4 is located. At the same time, the time marker 11 on the screen will record the recorded video duration, and the user can click the stop button 10 to complete the recording process.

In step S905, the recorded video is stored in a memory chip of the electronic device, the user can find the corresponding video in a photo album or folder of the electronic device, and the user can trigger the play request by clicking the corresponding video. After receiving the play request, the electronic device can play the corresponding video, that is, the images of the video capture region in a plurality of first image frames can be played, and the user can choose a horizontal screen or a vertical screen to play based on personal viewing habits. As shown in FIG. 10-5, the video content recorded with the second character 3 as the focus emphasis object is displayed on the screen, a time marker 11 displays the playing time of the current video, and the user can pause or play the corresponding video by clicking the pause/play button 12.

In the disclosure, the user can choose the focus emphasis object by himself to meet the demand of the user for video shooting, and the electronic device can also automatically identify the focus emphasis object and guide the picture content, so that the electronic device can simultaneously realize intelligent focusing and automatic scaling under the condition of a fixed position, help the user to shoot a more professional and natural high-quality video, make the user focus more on creating content, improve the attraction of the video, and provide the user with a more convenient, efficient and intelligent shooting experience.

An example of the disclosure provides a shooting apparatus, as shown in FIG. 11 which is a block diagram of a shooting apparatus shown in the disclosure.

The block diagram includes: an acquisition module 111, a display module 112, and a generation module 113. The acquisition module 111 is configured to acquire a plurality of first image frames in response to a first operation, the plurality of first image frames including a first object; the display module 112 is configured to display the plurality of first image frames and a first marker, the first marker is located in a region where the first object is located, and the first marker indicates that the region where the first marker is located in the plurality of first image frames is being used as a video capture region to generate a video; and the generating module 113 is configured to generate a video from images of the video capture region in the plurality of first image frames.

In an example of the disclosure, the display module 112 is further configured to gradually move the first marker from a region where the first object is located to a region where the second object is located in the plurality of first image frames in response to the second operation.

In an example of the disclosure, the display module 112 is further configured to display a plurality of second image frames, the plurality of second image frames showing images of the region where the first marker is located in the plurality of first image frames.

In an example of the disclosure, the display module 112 is further configured to, in the process of gradually moving the first marker from the region where the first object is located to the region where the second object is located in the plurality of first image frames, change the images shown in the plurality of second image frames as the region where the first marker is located changes.

In an example of the disclosure, the display module 112 is further configured to, in response to a third operation, adjust a size of the first marker.

In an example of the disclosure, the display module 112 is further configured to blur other regions in the plurality of first image frames except the region where the first marker is located.

In an example of the disclosure, the display module 112 is further configured to, before displaying the plurality of first image frames and the first marker, display the plurality of first image frames and recognize a preset object in the first image frames; and
display a second marker, the second marker indicating a region where the preset object is located in the plurality of first image frames.

In an example of the disclosure, the display module 112 is further configured to change the second marker indicating the region where the preset object with the highest priority is located in the plurality of first image frames to the first marker; the first marker is different from the second marker.

In an example of the disclosure, the display module 112 is further configured to, in a case that the preset object is not recognized in the plurality of first image frames, display the first marker in a preset position of the plurality of first image frames.

In an example of the disclosure, the display module 112 is further configured to, before displaying the plurality of first image frames and the first marker, in response to a sixth operation, cancel display of the second marker; and
display the first marker based on a region of the plurality of first image frames where the sixth operation acts on.

In an example of the disclosure, the display module 112 is further configured to, in response to a seventh operation, cancel display of the first marker; display the second marker, the second marker indicating the region where the preset object is located in the plurality of first image frames.

In an example of the disclosure, the display module 112 is further configured to acquire a plurality of third image frames, the plurality of third image frames being sequentially connected with the plurality of first image frames, the plurality of third image frames including a plurality of first frames acquired over a first time duration, the plurality of first frames including the second object and not including the first object; and
move the first marker from the region where the first object is located in the plurality of first image frames to the region where the second object is located in the plurality of first frames.

In an example of the disclosure, the plurality of third image frames further include a plurality of second frames acquired over a second time duration, the plurality of second frames are sequentially connected with the plurality of first frames, the second frames include the first object and the second object; and
the display module 112 is further configured to, in a case where the first time duration is less than or equal to a preset time duration, move the first marker from the region where the second object is located to the region where the first object is located in the plurality of second frames.

In an example of the disclosure, a ratio of the range of the first marker to the area of the plurality of first image frames is greater than or equal to 1/2.

With regard to the video information processing apparatus in the above example, the specific manner in which the respective modules perform operations has been described in detail in the example of the method and will not be explained in detail here.

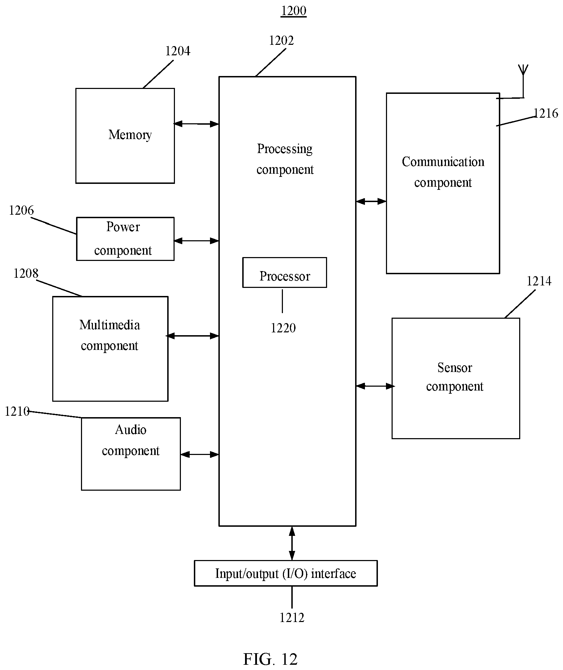

FIG. 12 is a block diagram illustrating an electronic device 1200 according to an example. For example, the electronic device 1200 may be a mobile phone, a computer, a digital broadcast terminal, a messaging device, a gaming console, a tablet device, a medical device, a fitness device, a personal digital assistant, or the like.

Referring to FIG. 12, the electronic device 1200 may include one or more of a processing component 1202, a memory 1204, a power component 1206, a multimedia component 1208, an audio component 1210, an input/output (I/O) interface 1212, a sensor component 1214, and a communication component 1216.

The processing component 1202 generally controls overall operations of the electronic device 1200, such as operations associated with display, phone calls, data communications, camera operations, and recording operations. The processing component 1202 may include one or more processors 1220 to execute instructions to perform all or a portion of the steps of the method described above. Additionally, the processing component 1202 may include one or more modules that facilitate interaction between the processing component 1202 and other components. For example, the processing component 1202 may include a multimedia module to facilitate interaction between the multimedia component 1208 and the processing component 1202.

The memory 1204 is configured to store various types of data to support the operation of the electronic device 1200. Examples of such data include instructions for any application or method operating on the electronic device 1200, contact data, phonebook data, messages, pictures, videos, etc. The memory 1204 may be implemented by any type or combination of volatile or non-volatile storage devices, such as static random access memory (SRAM), an electrically erasable programmable read-only memory (EEPROM), an erasable programmable read-only memory (EPROM), a programmable read-only memory (PROM), a read-only memory (ROM), a magnetic memory, a Flash memory, a magnetic or optical disk.

The power component 1206 provides power for the various components of the electronic device 1200. The power component 1206 may include a power management system, one or more power sources, and other components associated with power generating, managing, and distributing for the electronic device 1200.

The multimedia component 1208 includes a screen that provides an output interface between the electronic device 1200 and a user. In some examples, the screen may include a liquid crystal display (LCD) and a touch panel (TP). If the screen includes the touch panel, the screen may be implemented as a touch screen to receive an input signal from the user. The touch panel includes one or more touch sensors to sense touches, slides, and gestures on the touch panel. The touch sensor may not only sense a boundary of a touching or sliding action, but also detect the duration and pressure related to the touching or sliding operation. In some examples, the multimedia component 1208 includes a front camera and/or a rear camera. When the electronic device 1200 is in an operation mode, such as a shooting mode or a video mode, the front camera and/or the rear camera may receive external multimedia data. Each front camera and each rear camera may be a fixed optical lens system or have a focal length and the optical zooming capability.

The audio component 1210 is configured to output and/or input audio signals. For example, the audio component 1210 includes a microphone (MIC) configured to receive external audio signals when the electronic device 1200 is in an operational mode, such as a call mode, a recording mode, and a voice recognition mode. The received audio signals may be further stored in the memory 1204 or transmitted via the communication component 1216. In some examples, the audio component 1210 further includes a speaker for outputting audio signals.

The I/O interface 1212 provides an interface between the processing component 1202 and peripheral interface modules, which may be keyboards, click wheels, buttons, and the like. These buttons may include, but are not limited to, a homepage button, a volume button, a start button, and a lock button.

The sensor component 1214 includes one or more sensors for providing state assessment of various aspects for the electronic device 1200. For example, the sensor component 1214 may detect an open/close state of the electronic device 1200 and the relative positioning of the components, for example, the components are a display and a keypad of the electronic device 1200, the sensor component 1214 can also detect changes in position of the electronic device 1200 or a component of the electronic device 1200, presence or absence of user contact with the electronic device 1200, changes in orientation or acceleration/deceleration of the electronic device 1200, and changes in temperature of the electronic device 1200. The sensor assembly 1214 may include a proximity sensor configured to detect the presence of a nearby object in the absence of any physical contact. The sensor assembly 1214 may also include a light sensor, such as a CMOS or CCD image sensor, for use in imaging applications. In some examples, the sensor assembly 1214 may also include an acceleration sensor, a gyro sensor, a magnetic sensor, a pressure sensor, or a temperature sensor.

The communications component 1216 is configured to facilitate communications between the electronic device 1200 and other devices in a wired or wireless manner. The electronic device 1200 may access a wireless network based on a communication standard, such as WiFi, 2G, or 3G, or a combination of them. In an example, the communication component 1216 receives a broadcast signal or broadcast related information from an external broadcast management system via a broadcast channel. In one example, the communication component 1216 also includes a near field communication (NFC) module to facilitate short range communication. For example, the NFC module may be implemented based on a radio frequency identification (RFID) technology, an infrared data association (IrDA) technology, an ultra wide band (UWB) technology, a Bluetooth (BT) technology, and other technologies.

In an example, the electronic device 1200 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors, or other electronic elements, for performing the method described above.

In an example, there is also provided a non-transitory computer-readable storage medium including instructions, such as the memory 1204 including instructions, which are executable by the processor 1220 of the electronic device 1200 to complete the shooting method described above. For example, the non-transitory computer readable storage medium may be an ROM, a random access memory (RAM), a CD-ROM, a magnetic tape, a floppy disk and an optical data storage device.

A non-transitory computer-readable storage medium enables a processing apparatus of an electronic device to perform a shooting method provided by an example of the disclosure when instructions in the storage medium are executed by a processor of the electronic device.

It is understood that the disclosure is not limited to the precise structures that have been described above and shown in the drawings. The scope of the disclosure is limited only by the appended claims.

## Claims

1. A shooting method, comprising:
acquiring (S101) a plurality of first image frames in response to a first operation, the plurality of first image frames comprising a first object;
displaying (S102) the plurality of first image frames and a first marker, wherein the first marker is located in a region where the first object is located, and the first marker indicates that the region where the first marker is located in the plurality of first image frames is being used as a video capture region to generate a video; and
generating (S103; S704) a video from images of the video capture region in the plurality of first image frames.

2. The shooting method of claim 1, further comprising:
in response to a second operation, moving the first marker from the region where the first object is located to a region where a second object is located in the plurality of first image frames.

3. The shooting method of claim 1 or 2, further comprising:
displaying a plurality of second image frames, the plurality of second image frames showing images of the region where the first marker is located in the plurality of first image frames.

4. The shooting method of claim 3, further comprising:
while moving the first marker from the region where the first object is located to the region where the second object is located in the plurality of first image frames, changing the images shown in the plurality of second image frames as the region where the first marker is located changes.

5. The shooting method of any of claims 1 to 4, comprising:
in response to a third operation, adjusting a size of the first marker.

6. The shooting method of any of claims 1 to 5, further comprising:
blurring other regions in the plurality of first image frames except the region where the first marker is located.

7. The shooting method of any of claims 1 to 6, wherein, before displaying the plurality of first image frames and the first marker, the shooting method further comprises:
displaying (S701; S901) the plurality of first image frames and recognizing a preset object in the plurality of first image frames; and
displaying (S702; S902) a second marker, the second marker indicating a region where the preset object is located in the plurality of first image frames;
optionally, the shooting method further comprising:
changing (S703; S903) the second marker indicating the region where the preset object with a highest priority is located in the plurality of first image frames to the first marker;
wherein the first marker is different from the second marker.

8. The shooting method of claim 7, further comprising:
in response to determining that the preset object is not recognized in the plurality of first image frames, displaying the first marker in a preset position of the plurality of first image frames.

9. The shooting method of claim 7 or 8, wherein, before displaying the plurality of first image frames and the first marker, the shooting method further comprises:
in response to a sixth operation, canceling display of the second marker; and
displaying the first marker based on a region of the plurality of first image frames where the sixth operation acts on.

10. The shooting method of any of claims 1 to 9, further comprising:
in response to a seventh operation, canceling display of the first marker; and
displaying the second marker, the second marker indicating the region where the preset object is located in the plurality of first image frames.

11. The shooting method of any of claims 1 to 10, further comprising:
acquiring a plurality of third image frames, the plurality of third image frames being sequentially connected with the plurality of first image frames, the plurality of third image frames comprising a plurality of first frames acquired over a first time duration, the plurality of first frames comprising the second object and not comprising the first object; and
moving the first marker from the region where the first object is located in the plurality of first image frames to the region where the second object is located in the plurality of first frames.

12. The shooting method according to claim 11, wherein, the plurality of third image frames further comprise a plurality of second frames acquired over a second time duration, the plurality of second frames are sequentially connected with the plurality of first frames, the plurality of second frames comprise the first object and the second object;
the shooting method, further comprises:
in response to determining that the first time duration is less than or equal to a preset time duration, moving the first marker from the region where the second object is located to the region where the first object is located in the plurality of second frames.

13. The shooting method of any of claims 1 to 12, further comprising:
making a ratio of the range of the first marker to the area of the plurality of first image frames greater than or equal to 1/2.

14. An electronic device (1200), comprising:
a camera;
a processor (1220); and
a memory (1204), configured to store processor-executable instructions;
wherein the processor (1220) is configured to :
acquire a plurality of first image frames in response to a first operation, the plurality of first image frames comprising a first object;
display the plurality of first image frames and a first marker, wherein the first marker is located in a region where the first object is located, and the first marker indicates that the region where the first marker is located in the plurality of first image frames is being used as a video capture region to generate a video; and
generate a video from images of the video capture region in the plurality of first image frames.

15. A non-transitory computer-readable storage medium having stored thereon executable instructions, wherein when the executable instructions are executed by a processor, implement:
acquiring a plurality of first image frames in response to a first operation, the plurality of first image frames comprising a first object;
displaying the plurality of first image frames and a first marker, wherein the first marker is located in a region where the first object is located, and the first marker indicates that the region where the first marker is located in the plurality of first image frames is being used as a video capture region to generate a video; and
generating a video from images of the video capture region in the plurality of first image frames.
